Europäisches Patentamt

(19) European Patent Office

Office européen des brevets

(11) Publication number: **0 023 404**
**B1**

(12) **EUROPEAN PATENT SPECIFICATION**

(45) Date of publication of patent specification: **24.10.84**

(21) Application number: **80302425.6**

(22) Date of filing: **18.07.80**

(51) Int. Cl.³: **F 16 B 37/12**

(54) Threaded metal insert.

(30) Priority: **26.07.79 US 60765**
**17.03.80 US 130621**

(43) Date of publication of application:
**04.02.81 Bulletin 81/05**

(45) Publication of the grant of the patent:
**24.10.84 Bulletin 84/43**

(84) Designated Contracting States:
**DE FR GB IT**

(56) References cited:
**DE-A-2 017 730**
**GB-A- 736 317**
**US-A-3 280 873**
**US-A-3 566 947**

(73) Proprietor: **Jukes, John Arthur**
**680 Napa Court**
**Claremont California 91711 (US)**

(72) Inventor: **Jukes, John Arthur**
**680 Napa Court**
**Claremont California 91711 (US)**

(74) Representative: **Jones, Colin et al**
**W.P. THOMPSON & CO. Coopers Building**
**Church Street**
**Liverpool L1 3AB (GB)**

Courier Press, Leamington Spa, England.

## Description

The invention relates to threaded inserts which are screwed into a tapped hole to replace or strengthen worn or weakened threads.

Many different inserts have been developed together with various approaches for installing them. One such approach is the use of spiral metal coils threaded into the base material with the coil having a diamond-shaped cross-section. While such coils improve strength they are limited by the size of diamond-shaped wire which must match the pitch of the threaded hole that receives the coil. The approach of threading one wire coil into a prepared hole and then threading another coil into the first one is sometimes used to achieve larger diameter. This is a tedious and expensive process.

Another system includes the use of a threaded insert having axial slots in its exterior and pins initially attached to the insert near its upper end, to be pounded into the base material after the insert has been threaded into the tapped hole in the base material. As can be appreciated, this system is expensive from both a fabrication and installation standpoint. In addition, the pins sometimes break off before installation, thus rendering the insert unusable, or the pins may deform the thread in the tapped hole.

Inserts having exterior threads which interfere with the threads in the tapped opening of the base material have also been employed, but this solution has been unsatisfactory due to difficulties of installation and reliability of staying in place.

Another approach is described in U.S.A. Patent No. 3,566,947. This patent specification describes a thin walled threaded metal insert which has a threaded exterior and a partially threaded interior. A threaded tool is then used to position the insert in the tapped hole and complete the thread on the interior portion of the insert. This causes a bulging of the insert walls outwardly to lock the insert in the tapped hole. Although such an insert is quite suitable for many applications requiring thin walled inserts, in other applications, a thick walled insert is required.

Applications requiring a thick walled insert are of two basic types. The first is an insert repair situation in which the threads of an installed insert have been stripped. Such a problem can exist, for example, with inserts used to provide threaded connections for spark plugs. In order to repair the connections, the old thread must be drilled out and the hole counterbored and tapped. This creates a tapped hole of a larger diameter than originally present, which in turn requires an insert of a larger diameter. Since the threaded connection on the spark plug remains the same, the wall of the new insert must be thicker in order that the interior diameter of the new insert be the same as that of the old insert.

The second major type of application for thick walled inserts is an original threaded connection situation in which the depth of the tapped hole is small such as occurs when the base member is thin. Since the depth of the tapped hole is small, in order to create a threaded connection with sufficient strength, the surface area of contact between the tapped hole and the threaded member which is to be inserted in the tapped hole must be increased. This can be accomplished by using a large diameter insert which will increase the pullout strength of the threaded connection. Since the diameter of the screw or bolt which is to be threaded into the tapped hole is of a predetermined size, often the insert must have a thick wall.

These applications requiring thick walled inserts present a special problem to the inserts described in US—A—3566947. This is true because the walls of the inserts are of such a thickness that, when the interior thread is completed by a threaded tool, the force created is not sufficient to bulge the insert walls outwardly far enough to lock the insert securely in the tapped hole.

GB—A—736317 describes and illustrates an externally and internally screw-threaded insert provided with a discrete locking element in the form of a nylon plug but such plug initially stands proud of the stepped aperture in which it is received so that it will frictionally engage the screw-threaded bore in the base member as the insert is threaded into the bore. A lateral thrust is thereby exerted on the insert to force the external thread on the insert into tight frictional engagement with the threaded bore in the base member. Thus substantial torque is required in order to screw the insert home once the nylon locking element has engaged the threaded bore and the torque needed to loosen the insert is substantially no greater. This contrasts with the present invention wherein the locking element is displaced outwardly into locking engagement with the threaded bore and this outward displacement to generate the locking effect only takes place after the insert has been screwed home.

An object of the present invention is to solve these problems associated with thick walled inserts.

In accordance with this invention, there is provided an insert for installation into a base member, the insert comprising a tubular body having an exterior which is screw-threaded and an interior which has a portion which is screw-threaded and a portion which is incompletely screw-threaded so that said insert can be installed into a tapped hole using a screw-threaded insert driving tool which thereafter completes the incompletely threaded interior portion of said insert creating a force outward towards the wall of the hole in said base member, characterised in that at least one discrete locking element is positioned in an aperture in said exterior outwardly from said incompletely threaded portion so that said locking element is forced outwardly to engage the wall of said hole in the base member when said incompletely threaded portion is completed by means of the threaded tool, whereby to lock said insert securely in place.

In use, the insert of the present invention is threaded into a tapped hole in the base member until it meets a stop, e.g. when a flanged or outwardly flared head on the exterior of the insert engages the base member. The threaded tool is then forcibly rotated further to complete the threads in the interior of the insert which creates a force outwardly against the wall of the insert. This force urges the locking element or elements outwards more easily than the portion of the insert surrounding the locking element or elements so that the latter engage the wall of the tapped hole and securely lock the insert in place.

Preferably the apertures in which the locking elements are positioned extend at an angle with respect to a radial line of the insert when the insert is spherical. This cams the spherical element to engage more tightly the wall of the tapped hole, when torque is applied to attempt to remove the insert.

Brief Description of the Drawings

Figure 1 is an exploded perspective view of an insert in accordance with the invention, together with an insert driving tool and a base member;

Figure 2 is a side view partially in section, showing the insert being threaded into the tapped hole of the base member, using the insert driving tool;

Figure 3 is an enlarged fragmentary view of one side of the base of the insert of Figure 2 with the insert driving tool removed;

Figure 4 is an enlarged fragmentary view of the insert threaded into the base member by the insert driving tool but before the internal thread is complete;

Figure 5 is a perspective view of a locking element in the form of a plug having a chisel top, cylindrical centre, and conical base;

Figure 6 is a side view of a locking element in the form of a plug having a flat top, a cylindrical centre and a conical base;

Figure 7 is a perspective view of a locking element of a spherical shape; and

Figure 8 is a fragmentary cross-sectional view of an insert having a spherical locking element in an aperture extending non-radially.

Detailed Description of the Preferred
Embodiments of the Invention

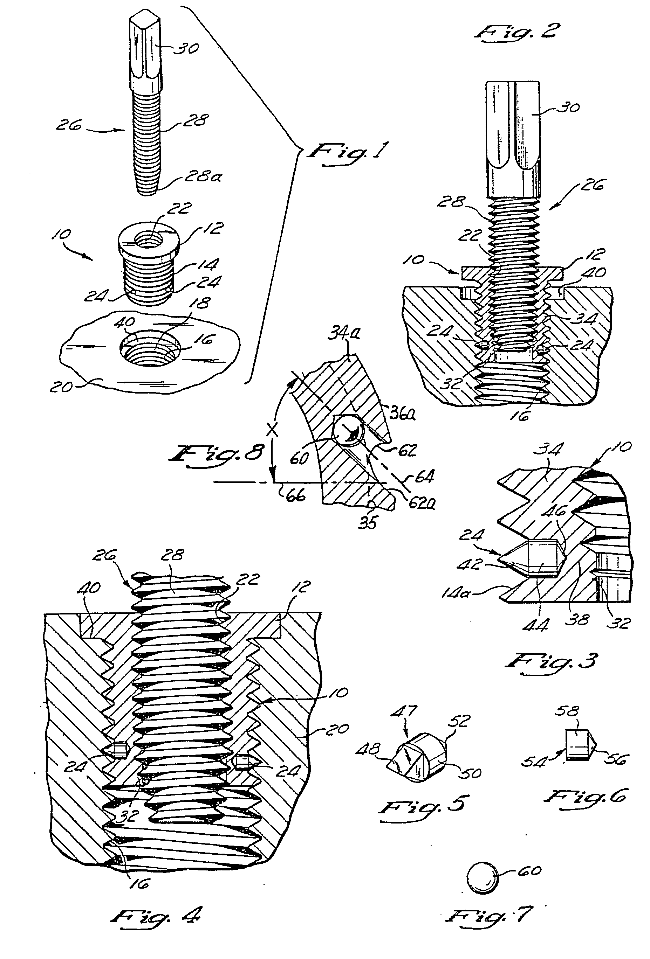

Referring first to Figure 1, there is shown a tubular insert 10 having an annular body made of stainless steel or cold rolled steel. The upper end of the insert 10 is formed with an outwardly flared head 12 on its exterior. A substantial portion of the exterior of the insert 10 is formed to threadably mate with a thread 16 formed in a tapped hole 18 in a base member 20.

The base member 20 can be formed from any one of a variety of materials, such as aluminium, magnesium, or steel.

The interior of the insert 10 is formed with a screw thread 22 which extends only partially along the entire length of the insert 10 as will be more fully described later. The insert 10 has locking elements 24 which are discrete from the insert 10 and which are shown positioned within the exterior thread 14. The locking elements 24 are preferably of material harder than that of the base member 20 so that they will be better able to penetrate the base member 20 and provide good locking action; however, considerable locking can be obtained with locking elements somewhat softer than the base. For example, aluminium locking elements are in some applications suitable for use with a cast iron base.

Also shown in Figure 1, is an insert driver tool 26 which is a known item and has a screw thread 28 formed on one end with the bottommost turns 28a of the thread being of decreasing diameter. The basic diameter and pitch of the thread 28 is the same as the interior thread 22 of the insert. The insert driver tool 26 is formed of steel and is designed to cold form screw thread without producing chips even in such hard material as stainless steel. The upper end 30 of the insert driver tool 26 has wrenching flats to facilitate turning with a wrench.

The interior of the insert 20 is shown more clearly in Figure 2 in which the interior thread 22 is shown extending from the flared head 12 downwardly to a lower portion 32 which is formed with an incomplete thread. The term "incomplete thread" as used herein encompasses both imperfect thread and no thread. In machining the interior thread 22, it is easier to leave an imperfect thread than no thread at all. The incompletely threaded portion 32 extends for an axial distance of about one or two thread turns and preferably no more than three turns.

As shown in the preferred embodiment in Figure 2, the pitch of the interior thread 22 on the threaded portion is less than the pitch of the exterior thread 14. The interior thread 22 is not radially aligned, i.e., timed, with the exterior thread 14. If desired, the threads may be timed.

Referring now to Figure 3, there is shown an enlarged fragmentary view of a portion of the insert 10 showing the incompletely threaded portion 32. A locking element in the form of a plug 24 is shown positioned in the wall 34 of the insert 10. In order to position the plug 24 in the wall 34 of the insert 10, an aperture is drilled into the insert 10 at the bottom few exterior threads 14a of the insert 10. The aperture is drilled at a location along the depth of the insert where the aperture is radially outward from the incompletely threaded portion 32 of the insert 10. Advantageously, the apertures are drilled into the crest of the exterior thread 14. Also advantageously, the aperture which holds the plug 24 does not extend completely through the wall 34 of the insert 10, thereby creating a socket with a wall portion 38 of reduced thickness between the plug 24 and the incompletely threaded portion 32. This wall portion 38 serves to prevent the plug 24 from moving into the threaded hole of the insert 10.

The plug 24 can be held in the aperture by an adhesive or mechanically by staking or interference fit so that is remains in place until the insert 10 is used. One or more plugs can be used, the number depending upon the amount of additional locking strength which is required for the insert 10. For most applications, no more than four plugs would be required.

To install the insert 10 into the base member 20, the insert driver tool 26 is first freely threaded into the insert up to the point where the full diameter turn of the insert driver thread 28 engage the incompletely threaded portion 32 of the insert, as shown in Figure 2. The insert 10 is completely threaded into the tapped hole 18 in the base member 20 up to the point where the outwardly flared head 12 of the insert 10 engages the upper end of the countersink 40 of the tapped hole 18, preventing further inward movement of the insert 10. The inward movement of the insert 10 can also be limited by engagement of the end of the insert with the bottom of the tapped hole 18, although this is not the usual arrangement.

Referring now to Figure 4, by forcibly rotating the insert driver tool 26 by an additional amount, the insert driver thread 28 cold forms the incompletely threaded portion 32 of the insert 10 to complete the thread 22 to the bottom of the insert 10.

Completing the thread of the portion 32 creates a force which is directed outward towards the wall 16 of the tapped hole. Since wall portion 38 behind the plug is of a much reduced thickness compared with the portion of the insert surrounding the plug having the thickness of the wall 34, the outward force will more easily urge the portion 38 outwardly and thus urge the locking plug 24 outward and into the wall of the tapped hole. The locking plug will also move outwardly more easily than the adjacent insert material since it is a discrete entity from the insert 10 itself. The locking plug 24 being of a harder material than that of the base member 20 has a tendency to penetrate the wall of the tapped hole 18, thereby providing secure locking of the insert within the base member 20. Thus, the thickness of the wall 34 is such that its response to the outward force created by the completion of the threads of the interior is insufficient to securely lock the insert within the tapped hole 18. The locking plugs 24 provide the additional necessary locking action.

The insert driver tool 26 may be easily backed out of the insert 10 by being rotated in the opposite direction and the insert 10 will remain firmly locked in place in the base member 20. Instead of using an insert driver tool 26 as illustrated, a hardened machine screw which might be used as the permanent fastening member can be used as the driver tool to complete the incompletely threaded portion 32 in the insert 10. In this case, the screw could be removed from or left in the insert 10 as desired.

The particular locking element in the form of a plug as shown in Figures 2 to 4 has a conical outer end 42, a cylindrical centre 44, and a conical base 46. When installing the locking plug in the drilled aperture, the conical base 46 is seated in the aperture with the apex of the cone directed inwardly towards the incompletely threaded interior portion 32. The apex of the conical outer end 42 is therefore directed away from the incompletely threaded interior portion 32 towards the wall of the tapped hole 18.

Reference is made now to Figures 5, 6 and 7 in which are shown three additional types of locking elements. Figure 5 shows a preferred locking element in the form of a plug 47 which has a chisel top 48, a cylindrical centre section 50, and a conical base section 52. In order to position the plug 47 into the wall 34 of the insert 10, the conical base section 52 is inserted into the aperture with the apex of the cone directed inwardly towards the incompletely threaded portion 32. The point of the chisel top will thereby be directed outwardly towards the wall of the tapped hole 18. Substantially all of the drilled hole will be filled by the conical base section 52 and a portion of the cylindrical centre section 50 which is aligned coaxially with the aperture. Advantageously, the chisel top 48 is aligned with the crest of the exterior thread 14 of the insert 10. This alignment makes it less likely that the plug 47 will interfere with the threading of the insert 10 in the tapped hole 18. In addition, the chisel top 48 allows the plug 47 to more easily penetrate the wall of the tapped hole 18.

Referring to Figure 6, there is shown another type of locking element in the form of a plug 54 having a conical base 56 and a cylindrical section 58. The locking plug 54 is therefore quite similar to the locking plug 47 shown in Figure 5 except that it lacks the chisel top 48. The plug 54 would be inserted into the wall 34 of the insert 10 in the same manner as described above.

Finally, Figure 7 shows a third type of locking element 60 which has a spherical shape. Ball-shaped locking elements do not have the advantage of a somewhat sharp edge to help locking into the base member, as do the locking element 24 and 47 of Figures 3 and 5 but they are readily available and less expensive. They also need not be oriented upon installation. Further, it has been found that improved locking can be obtained by positioning ball-shaped locking elements in apertures that are non-radially oriented.

Referring to Figure 8, there is shown in cross- section a fragment of an insert wall 34a, which is like that of the insert wall 34 except that the aperture 62 in which the ball-shaped locking element 60 is positioned is in the form of a non-radially oriented socket. That is, the aperture 62 is drilled on an axis 64 that is at an angle X, preferably about 45° with respective to an intersecting line 66 which is a radius of the insert wall 34a. The aperture 62 is drilled through the crust 36a of the outer thread of the insert. The dotted line 35 represents the root of the exterior thread. The open outer end of the aperture 62 is shown with a curved configuration on its side because the drilling of the socket cuts through the flanks of the exterior thread.

Figure 8 shows the locking element 60 and the insert wall 34a before the insert has been installed in the base member. As can be seen, the size of the locking element 60 with respect to the aperture 62 is such that the element can be located in the lower end of the aperture essentially inwardly from the root diameter. This ensures that the spherical locking element 60 does not interfere with the threading of the insert into the base member. If the aperture 62 were shallower, the spherical sides of the locking element would protrude beyond the flanks of the thread and thus interfere with the installation of the insert.

In utilizing the tool 30 to complete the thread on the inner wall of the insert, the spherical locking element 60 is forced outwardly in the aperture 62 in essentially the same manner as described above with respect to the other locking elements. That is, the locking element 60 is forced outwardly to penetrate to some extent the material of the surrounding base member, and thus lock the insert in the base member. The significance of the non-radical aperture 62 is recognized when considering the situation when torque is applied to the insert to attempt to unthread or back out the insert from the base member. The insert is installed into the base member by rotating it in a clockwise direction, as viewed in Figure 8. Thus, the open end of the aperture 62 might be said to open or face in the clockwise direction or in the insert installing direction. When the interior thread is completed, the locking element 60 is forced outwardly in the aperture 62 protruding partially beyond the flanks and crest with the base member. If in that condition, a counterclockwise or backout torque is applied to the insert in an attempt to back it out, the ball-shaped locking element 60 is forced against the longer wall 62a of the aperture, and due to the angular orientation of the aperture wall 62a, the locking element 60 is cammed outwardly further into the base member thus tending to lock the insert more tightly into position and tending to resist the counterclockwise rotation of the insert. Thus, by the simple expedient of drilling the aperture 62 in a non-radial orientation with the open end of the aperture extending in the direction for installing the insert, more reliable locking of the insert in the base member is obtained.

From the foregoing, it can be appreciated that the insert 10 can be fabricated by standard machine operation and can be easily and quickly installed into the base member 20 requiring only simply tapped hole preparation.

## Claims

1. An insert (10) for installation into a base member (20), the insert comprising a tubular body whose exterior is screw-threaded (at 14) and an interior which has a portion which is screw-threaded (at 22) and a portion (32) which is incompletely screw-threaded so that said insert (10) can be installed into a tapped hole (18) using a screw-threaded insert driving tool (26) which thereafter completes the incompletely threaded interior portion (32) of said insert creating a force outward towards the wall of the hole (18) in said base member (20), characterised in that at least one discrete locking element (24, 47, 54 or 60) is positioned in an aperture (62) in said body exterior outwardly from said incompletely threaded portion so that said locking element is forced outwardly to engage the wall of said hole (18) in the base member (20) when said incompletely threaded portion (32) is completed by means of the threaded tool (26), whereby to lock said insert securely in place.

2. An insert as claimed in claim 1, wherein said aperture (62) does not extend completely through said incompletely threaded interior portion (32) thereby leaving material between said locking element (24, 47, 54 or 60) and said incompletely threaded interior portion so that said material will be forced outwards when said screw-threaded tool (26) is threaded within the incompletely threaded portion (32), which will in turn force said locking element outwardly.

3. An insert as claimed in claim 2, wherein the depth of said aperture (62) in said body exterior is such that said locking element (24, 47, 54 or 60) will be more easily forced outwards by the threading of the incompletely threaded portion (32) than a portion of the body surrounding said locking element.

4. An insert as claimed in claim 1, 2 or 3, wherein the or each locking element (24, 47, 54) comprises a plug which substantially fills said aperture (62).

5. An insert as claimed in claim 1, 2 or 3, wherein said locking element (60) or at least one of said locking elements (60) is of a generally spherical shape.

6. An insert as claimed in claim 4, wherein said plug (24, 47 or 54) or at least one of said plugs has a base (46, 52, 56) generally in the shape of a cone and a portion (44, 50, 58) generally in the shape of a cylinder, the apex of said cone being directed inwardly towards said incompletely threaded portion (32) and said cylinder being oriented coaxially with said aperture (62).

7. An insert as claimed in claim 4 or 6, wherein said plug (24) or at least one of said plugs has a conically shaped outer end (42) whose apex is directed outwardly away from said incompletely threaded portion (32).

8. An insert as claimed in claim 4 or 6, wherein said plug 47 or at least one of said plugs has a chisel-like top (48) directed outwardly away from said incompletely threaded interior portion (32).

9. An insert as claimed in claim 8, wherein said plug (47) is positioned in a crest (36a) of said exterior thread (14) of the tubular body.

10. An insert as claimed in claim 9, wherein said chisel-like top (48) is aligned with the remainder of the crest of said exterior thread (14).

11. An insert as claimed in any of claims 1 to 5, wherein said aperture (62) in which said locking elements (60) is positioned is oriented at an angle (X) which will cause said locking element (60) to be cammed outwardly when a torque is applied to said insert (10) to back it out of said tapped hole once said locking element (60) has been forced outwardly to engage the wall of said hole (18) when said screw-threaded tool (26) is threaded within the incompletely threaded interior portion (32).

12. An insert as claimed in any preceding claim, wherein said locking element (24, 47, 54 or 60) is formed of a material harder than that of said base member (20).

**Patentansprüche**

1. Einsatz (10) zum Einsetzen in ein Tragglied (20), wobei der Einsatz einem rohrförmigen Körper aufweist, dessen Äußeres mit einem schraubenförmigen Gewinde (14) versehen ist und dessen Inneres einen mit Schraubengewinde (22) versehenen Abschnitt und einen Abschnitt (32) aufweist, der mit unvollständigem Schraubengewinde versehen ist, so daß der Einsatz (10) in eine mit Gewinde versehenes Lock (18) eingesetzt werden kann, indem ein mit schraubenförmigen Gewinde versehenes Einsetz-Antriebswerkzeug (26) verwendet wird, das danach den mit unvollständigem Gewinde versehenen Inneren Abschnitt (32) des Einsatzes vervollständigt und eine nach außen in Richtung auf die Wand des Lochs (18) in dem Tragglied (20) gerichtete Kraft schafft, dadurch gekennzeichnet, daß wenigstens ein zusätzliches Verriegelungselement (24, 47, 54 oder 60) in einer Öffnung (62) in der Außenseite des Körpers außerhalb des mit unvollständigem Gewinde versehenen Abschnitts angeordnet ist, so daß das Verriegelungselement nach außen gedrückt wird, um an der Wand des Lochs (18) in dem Tragglied (20) anzugreifen, wenn der mit unvollständigem Gewinde versehene Abschnitt (32) mit Hilfe des mit Gewinde versehenen Werkzeugs (26) vervollständigt wird, um dadurch den Einsatz sicher an seiner Stelle zu verriegeln.

2. Einsatz nach Anspruch 1, dadurch gekennzeichnet, daß die Öffnung (62) sich nicht vollständig durch den mit unvollständigem Gewinde versehenen inneren Abschnitt (32) hindurch erstreckt und dadurch Material zwischen dem Verriegelungselement (24, 47, 54 oder 60) und dem mit unvollständigem Gewinde versehenen inneren Abschnitt beläßt, so daß dieses Material nach außen gedrückt wird, wenn das mit Schraubengewinde versehene Werkzeug (26) in den mit unvollständigem Gewinde versehenen Abschnitt (32) eingeschraubt wird, wodurch das Verriegelungselement nach außen gedrückt wird.

3. Einsatz nach Anspruch 2, dadurch gekennzeichnet, daß die Tiefe der Öffnung (62) in der Außenseite des Körpers derart ist, daß das Verriegelungselement (24, 47, 54 oder 60) dadurch leichter nach außen gedrückt wird, daß der mit unvollständigem Gewinde versehene Abschnitt (32) mit Gewinde versehen wird, als ein Teil des Körpers, der das Verriegelungselement umgibt.

4. Einsatz nach Anspruch 1, 2 oder 3, dadurch gekennzeichnet, daß das oder jedes Verriegelungselement (24, 47, 54) einen Stopfen aufweist, der im wesentlichen die Öffnung (62) ausfüllt.

5. Einsatz nach Anspruch 1, 2 oder 3, dadurch gekennzeichnet, daß das Verriegelungselement (60) oder wenigstens eines der Verriegelungselemente (60) eine im wesentlichen sphärische Gestalt hat.

6. Einsatz nach Anspruch 4, dadurch gekennzeichnet, daß daß der Stopfen (24, 47 oder 54) oder wenigstens einer der Stopfen eine Unterteil (46, 52, 56) im wesentlichen in der Gestallt eines Konus und einen Abschnitt (44, 50, 58) im wesentlichen in der Gestalt eines Zylinders hat, wobei die Spitze des Konus nach einen gegen den mit unvollständigem Gewinde versehenen Abschnitt (32) gerichtet ist und wobei der Zylinder koaxial mit der Öffnung (62) angeordnet ist.

7. Einsatz nach Anspruch 4 oder 6, dadurch gekennzeichnet, daß der Stopfen (24) oder wenigstens einer der Stopfen ein konisch geformtes äußeres Ende (42) aufweist, dessen Spitze nach außen weg von dem mit unvollständigem Gewinde versehenen Abschnitt (32) gerichtet ist.

8. Einsatz nach Anspruch 4 oder 6, dadurch gekennzeichnet, daß der Stopfen (47) oder wenigstens einer der Stopfen ein meißelartiges Oberteil (48) hat, das nach außen weg von dem mit unvollständigem Gewinde versehenen inneren Abschnitt (32) gerichtet ist.

9. Einsatz nach Anspruch 8, dadurch gekennzeichnet, daß der Stopfen (47) in einer Spitze (36a) des Außengewindes (14) des rohrförmigen Körpers angeordnet ist.

10. Einsatz nach Anspruch 9, dadurch gekennzeichnet, daß das meißelartige Oberteil (48) mit dem Rest der Spitze des Außengewindes (14) ausgerichtet ist.

11. Einsatz nach einem der Ansprüche 1 bis 5, dadurch gekennzeichnet, daß die Öffnung (62), in der das Verriegelungselement (60) angeordnet ist, unter einem Winkel (X) orientiert ist, der das Verriegelungselement (60) veranlaßt, nach außen gedrückt zu werden, wenn ein Drehmoment auf den Einsatz (10) ausgeübt wird, um diesen aus dem Gewindeloch herauszudrehen, nachdem einmal das Verriegelungselement (60) nach außen gedrückt worden ist, um an der Wand des Lochs (18) anzugreifen, wenn das mit Schraubengewinde versehenen Werkzeug (26) in den mit unvollständigem Gewinde versehenen inneren Abschnitt (32) eingeschraubt wird.

12. Einsatz nach einem der vorhergehenden Ansprüche, dadurch gekennzeichnet, daß das Verriegelungselement (24, 47, 54 oder 60) aus einem Material geformt ist, das härter ist als dasjenige des Tragglieds (20).

**Revendications**

1. Douille (10) destinée à être mise en place dans un élément (20) de base, la douille comprenant un corps tubulaire dont l'extérieur est fileté (en 14) et dont l'intérieur comporte une partie qui est filetée (en 22) et une partie (32) qui est incomplètement filetée afin que ladite douille (10) puisse être mise en place dans un trou taraudé (18) à l'aide d'un outil fileté (26) d'entraînement de douille qui achève ensuite la partie intérieure incomplètement filetée (32) de ladite douille, engendrant une force orientée vers l'extérieur et vers la paroi du trou (18) dudit élément de base (20), caractérisée en ce qu'au moins un élément de blocage (24, 47, 54 ou 60), physiquement distinct, est positionné dans un ouverture (62) dudit extérieur du corps et vers l'extérieur de ladite partie incomplètement filetée afin que ledit élément de blocage soit forcé vers l'extérieur pour s'appliquer contre la paroi dudit trou (18) de l'élément de base (20) lorsque ladite partie incomplètement filetée (32) est achevée au moyen de l'outil fileté (26), de façon à bloquer ladite douille fixement en position.

2. Douille selon la revendication 1, dans laquelle ladite ouverture (62) ne s'étend pas totalement à travers ladite partie intérieure incomplètement filetée (32), laissant ainsi de la matière entre ledit élément de blocage (24, 47, 54 ou 60) et ladite partie intérieure incomplètement filetée afin que ladite matière soit déplacée à force vers l'extérieur lorsque ledit outil fileté (26) est vissé à l'intérieur de la partie incomplètement filetée (32) qui, elle-même, déplace à force ledit élément de blocage vers l'extérieur.

3. Douille selon la revendication 2, dans laquelle la profondeur de ladite ouverture (62) dans ledit extérieur du corps est telle que ledit élément de blocage (24, 47, 54 ou 60) est déplacé à force vers l'extérieur plus aisément par le vissage de la partie incomplètement filetée (32) que par une partie du corps entourant ledit élément de blocage.

4. Douille selon la revendication 1, 2 ou 3, dans laquelle le ou chaque élément de blocage (24, 47, 54) comprend un ergot qui remplit sensiblement ladite ouverture (62).

5. Douille selon la revendications 1, 2 ou 3, dans laquelle ledit élément de blocage (60) ou au moins l'un desdits éléments de blocage (60) est de forme générale sphérique.

6. Douille selon la revendication 4, dans laquelle ergot (24, 47 ou 54) ou au moins l'un desdits ergots comporte une base (46, 52, 56) ayant globalement la forme d'un cône et une partie (44, 50, 58) ayant globalement la forme d'un cylindre, le sommet dudit cône étant dirigé vers l'intérieur en direction de ladite partie incomplètement filetée (32) et ledit cylindre étant orienté coaxialement à ladite ouverture (62).

7. Douille selon la revendication 4 ou 6, dans laquelle ledit ergot (24) ou au moins l'un desdits ergots présente une extrémité extérieure (42) de forme conique dont le sommet est dirigé vers l'extérieur et s'éloigne de ladite partie incomplètement filetée (32).

8. Douille selon la revendication 4 ou 6, dans laquelle ledit ergot (47) ou au moins l'un desdits ergots comporte un sommet (48) analogue à un ciseau dirigé vers l'extérieur et s'éloignant de ladite partie intérieure incomplètement filetée (32).

9. Douille selon la revendication 8, dans laquelle ledit ergot (47) est positionné dans une crête (36a) dudit filet extérieur (14) du corps tubulaire.

10. Douille selon la revendication 9, dans laquelle ledit sommet (48) analoque à un ciseau est aligné avec la partie restante de la crête dudit filet extérieur (14).

11. Douille selon l'une quelconque des revendications 1 à 5, dans laquelle ladite overture (62) dans laquelle est positionné ledit élément (60) de blocage est orientée sous un angle (X) provoquant un déplacement vers l'extérieur, par action de came, dudit élément (60) de blocage lorsqu'un couple est appliqué à ladite douille (10) pour la faire ressortir dudit trou taraudé une fois que ledit élément de blocage (60) a été forcé vers l'extérieur pour porter contre la paroi dudit trou (18) lorsque ledit outil fileté (26) est vissé à l'intérieur de la partie intérieure incomplétement filetée (32).

12. Douille selon l'une quelconque des revendications précédentes, dans laquelle ledit élément de blocage (24, 47, 54 ou 60) est réalisé en une matière plus dure que celle dudit élément de base (20).

0 023 404

Fig. 1

Fig. 2

Fig. 8

Fig. 3

Fig. 4

Fig. 5

Fig. 6

Fig. 7